# EUROPEAN PATENT SPECIFICATION

(11) **EP 1 839 981 B1**
(45) Date of publication and mention of the grant of the patent: **07.10.2009**
(21) Application number: 07105382.1
(22) Date of filing: 30.03.2007
(51) Int. Cl.: B60T 8/32, B60T 8/26, B62L 3/08

(54) **Brake fluid pressure controller for vehicle**
Bremsflüssigkeitsdrucksteuergerät für ein Fahrzeug
Unité de commande de pression de liquide de frein pour véhicule

(30) Priority: 31.03.2006 JP 2006098400
(43) Date of publication of application: 03.10.2007
(73) Proprietor: Nissin Kogyo Co., Ltd., Ueda-shi, Nagano 386-8505 (JP); Honda Motor Co., Ltd., Tokyo 107-8556 (JP)
(72) Inventor: Nakamura, Motoyasu, Ueda-shi, Nagano 386-8505 (JP); Arai, Noriyuki, Ueda-shi, Nagano 386-8505 (JP); Hasegawa, Tetsuya, Ueda-shi, Nagano 386-8505 (JP); Tsuchiya, Tomoharu, Ueda-shi, Nagano 386-8505 (JP); Amano, Tsutomu, Ueda-shi, Nagano 386-8505 (JP); Tani, Kazuhiko, Saitama 351-0193 (JP); Nishimoto, Yukimasa, Saitama 351-0193 (JP); Takenouchi, Kazuya, Saitama 351-0193 (JP)
(74) Representative: Rupp, Christian

(56) References cited:
- DE-A1- 19 841 152
- JP-A- 2000 006 779
- JP-A- 2000 255 402
- JP-B2- 3 457 190
- US-A- 5 613 740

## Description

### BACKGROUND OF THE INVENTION

### 1. Field of the Invention

The present invention relates to a brake fluid pressure controller for a vehicle. Particularly, the present invention relates a brake fluid pressure controller which can be mounted chiefly on a vehicle with a handlebar, such as two-wheeled motor cycle, three-wheeled motor vehicle and all-terrain vehicle (ATV) .

### 2. Description of the Related Art

Conventionally, there has been known a brake fluid pressure controller for a vehicle in which a braking force exerted in interlocking braking between a front wheel and a rear wheel of a vehicle, such as two-wheeled motor cycle, is controlled by increasing a fluid pressure using a pump (see, for example, unexamined Japanese patent publication Kokai No. 2000-00-6779).

Also, there has been known a brake fluid pressure controller for a vehicle in which braking force distribution in interlocking braking between a front wheel and a rear wheel of a vehicle, such as two-wheeled motor cycle, is controlled by increasing a fluid pressure using a pump so as to attain ideal braking force distribution (see, for example, the published Japanese patent application JP 2000 071 963 A and the granted Japanese patent publication No. 03 457 190 B2).

In the above-mentioned conventional brake fluid pressure controller for a vehicle, there is a room for improving response to operation by a brake operation element. For example, rise of braking force in initial braking of the wheel brake can be improved.

In addition, in the above-mentioned conventional brake fluid pressure controller for a vehicle, during ABS operation or interlocking braking operation, pulsation is transmitted to the brake operation element through a fluid passage due to the operation of the pump.

Therefore, it would be desirable to provide a brake fluid pressure controller for a vehicle that can improve rise of braking force in initial braking of the wheel brake and prevent pulsation of the pump from being transmitted to the brake operation element.

### SUMMARY OF THE INVENTION

In one aspect of the present invention, there is provided a brake fluid pressure controller for a vehicle with the features of claim 1.

### BRIEF DESCRIPTION OF THE DRAWINGS

The various aspects, other advantages and further features of the present invention will become more apparent by describing in detail illustrative, non-limiting embodiments thereof with reference to the accompanying drawings.
FIG. 1 is a brake fluid pressure circuit diagram to be used for a brake fluid pressure controller for a vehicle according to a first embodiment of the present invention.
FIG. 2 is a brake fluid pressure circuit diagram showing a state of the brake fluid pressure controller for a vehicle when an ignition is off.
FIG. 3 is a brake fluid pressure circuit diagram showing a state of the brake fluid pressure controller for a vehicle during regular braking.
FIG. 4 is a brake fluid pressure circuit diagram showing a state of the brake fluid pressure controller for a vehicle during interlocking braking.
FIG. 5 is a brake fluid pressure circuit diagram to be used for a brake fluid pressure controller for a vehicle according to a second embodiment of the present invention.
FIG. 6 is a modified example of a brake fluid pressure circuit diagram to be used for a brake fluid pressure controller for a vehicle according to the second embodiment of the present invention.

### DETAILED DESCRIPTION OF THE EXEMPLARY EMBODIMENTS

Embodiments of the present invention will be described in detail below with reference to the drawings. In the following descriptions, the same components are designated with the same reference characters, and thus a duplicate description is omitted.

### (First embodiment)

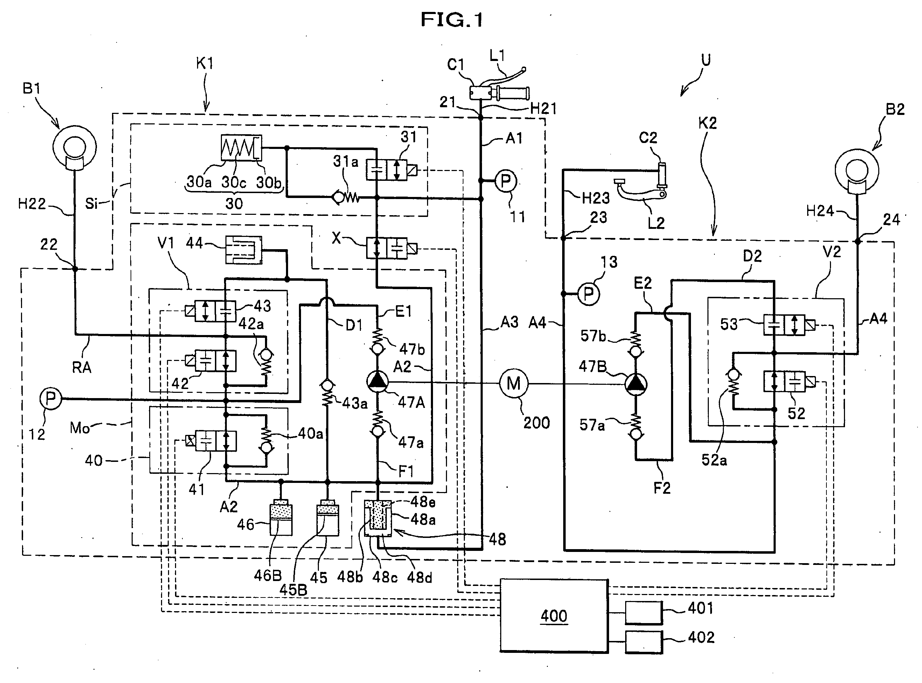

FIG. 1 is a brake fluid pressure circuit diagram to be used for a brake fluid pressure controller for a vehicle according to a first embodiment of the present invention.

As shown in FIG. 1, a brake fluid pressure controller U for a vehicle (hereinafter, simply referred to as "brake controller") according to the present embodiment is suitably used in a vehicle with a handlebar, such as two-wheeled motor cycle, three-wheeled motor vehicle and all-terrain vehicle (ATV), and contains two brake systems K1, K2. By appropriately controlling braking force (brake fluid pressure) to be applied to a wheel brake B1 on a front wheel and a wheel brake B2 on a rear wheel with a use of a controller 400, it becomes possible to perform both anti-lock braking control in which wheel brakes B1, B2 independently works and interlocking braking control in which two wheel brakes B1, B2 are interlocked.

The brake system K1 is configured for braking the front wheel, which leads from an inlet port 21 to an outlet port 22. To the inlet port 21 is connected a piping H21 which leads to a master cylinder C1 as a fluid pressure source, and to the outlet port 22 is connected a piping H22 which leads to the wheel brake B1 on the front wheel.

The other brake system K2 is configured for braking the rear wheel, which leads from an inlet port 23 to an outlet port 24. To the inlet port 23 is connected a piping H23 which leads to a master cylinder C2 (which is a separate fluid pressure source from the master cylinder C1), and to the outlet port 24 is connected a piping H24 which leads to the wheel brake B2 on the rear wheel.

Each of the master cylinders C1, C2 has a cylinder (not shown) connected to a brake fluid tank for storing brake fluid, and the cylinder has a rod piston (not shown) installed therein for pushing out the brake fluid by slidable movement in an axial direction of the cylinder, according to an operation of a brake operation element (brake lever L1 or brake pedal L2).

The brake system K1 on a front wheel-side will be explained first and the brake system K2 on a rear wheel-side will be explained next. The brake system K1 on the front wheel-side mainly includes: a cutoff valve X disposed in a fluid passage (oil passage) from the master cylinder C1 to the wheel brake B1; a stroke simulator Si connected to a fluid passage from the master cylinder C1 to the cutoff valve X; a modulator Mo connected to a fluid passage from the cutoff valve X to the wheel brake B1; a pressure member 48 disposed in a fluid passage from the master cylinder C1 to the modulator Mo; a first fluid pressure sensor 11 for detecting a brake fluid pressure in a fluid passage leading to the master cylinder C1; and a second fluid pressure sensor 12 for detecting a brake fluid pressure in a fluid passage leading to the wheel brake B1.

The stroke simulator Si includes a dummy cylinder 30, an on-off valve 31 and a check valve 31a.

The modulator Mo mainly includes a regulator 40, a control valve unit V1 (including an inlet valve 42 and an outlet valve 43, which are electromagnetic valves), a reservoir 44, a first accumulator 45 and a second accumulator 46 as brake fluid pools, and a pump 47A.

Hereinbelow, a fluid passage leading from the inlet port 21 to the cutoff valve X is referred to as an "output fluid pressure passage A1" ; a fluid passage leading from the cutoff valve X to the regulator 40 is referred to as an "communicating passage A2"; a fluid passage leading from the regulator 40 to the outlet port 22 is referred to as an "output fluid pressure passage RA" ; a fluid passage leading from the inlet port 21 to the pressure member 48 is referred to as an "output fluid pressure passage A3"; a fluid passage from the communicating passage A2 to the pump 47A is referred to as a "sucked fluid pressure passage F1"; a fluid passage leading from the output fluid pressure passage RA to the communicating passage A2 is referred to as an "open passage D1" ; and a fluid passage leading from the pump 47A to the output fluid pressure passage RA is referred to as a "discharged fluid pressure passage E1".

An expression "upstream side" means a master cylinder C1 (C2)-side, and a "downstream side" means a wheel brake B1 (B2)-side.

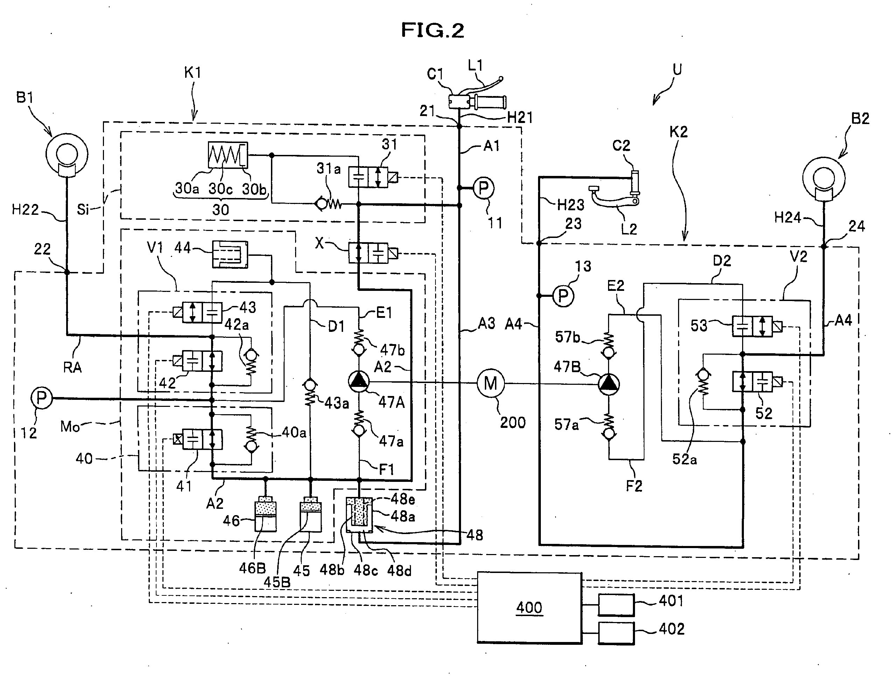

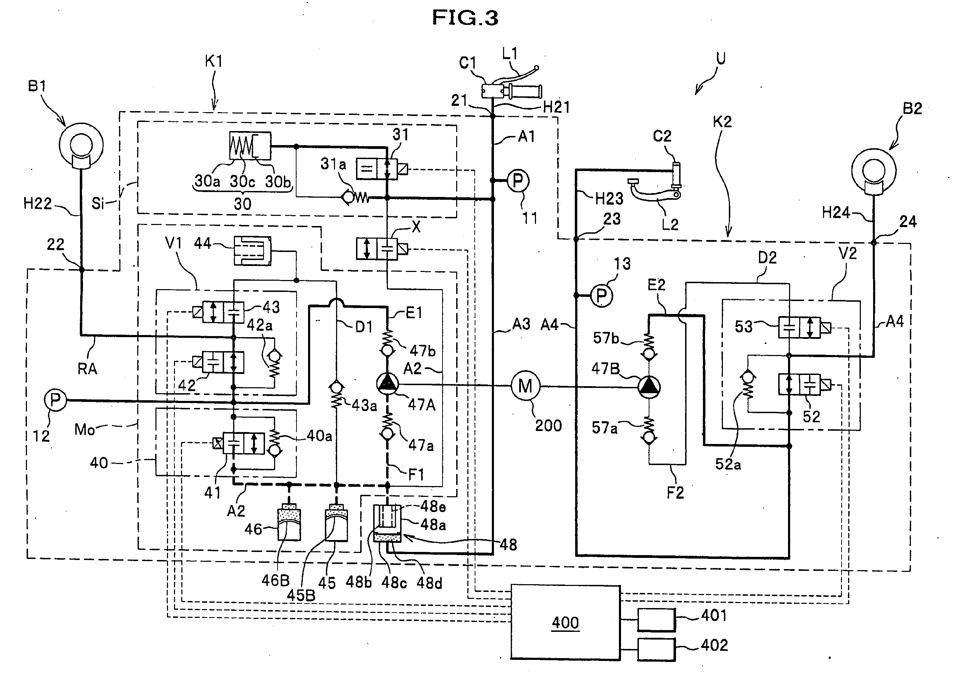

The cutoff valve X is an electromagnetic valve which is disposed between the output fluid pressure passage A1 and the communicating passage A2 and normally open. The cutoff valve X switches between a state that allows a flow of the brake fluid from the output fluid pressure passage A1 to the communicating passage A2, i.e. a flow of the brake fluid from the master cylinder C1-side (stroke simulator Si-side) to a modulator Mo-side, and a state that blocks the flow. In the cutoff valve X, an electromagnetic coil for driving a valving element thereof is electrically connected to the controller 400 which will be described below. The cutoff valve X is closed by excitation of the electromagnetic coil, and opened by demagnetization of the electromagnetic coil, based on the instruction from the controller 400. In the present embodiment, the cutoff valve X (electromagnetic valve) is set so as to close when a driving unit (e.g. engine and motor) of a vehicle is started. In other words, when the driving unit of the vehicle is operated, the cutoff valve X blocks a flow of the brake fluid from the output fluid pressure passage A1 to the communicating passage A2 (see FIG. 3). When the driving means or the controller 400 is not operated, the cutoff valve X is opened and an operating force of a brake lever L1 (i.e. a brake fluid pressure generated at the master cylinder C1) is directly transmitted to the wheel brake B1 (see FIG. 2).

The stroke simulator Si artificially provides the brake lever L1 with an operation reaction force of the brake lever L1, and in the present embodiment, is connected to the output fluid pressure passage A1 leading to the master cylinder C1.

The dummy cylinder 30 includes a cylinder body 30a, a piston 30b slidably inserted in the cylinder body 30a, and a piston spring 30c, and has a function of temporarily storing discharged brake fluid flowed in the output fluid pressure passage A1 as a result of the operation of the brake lever L1, and generating an operation reaction force of the brake lever L1.

The on-off valve 31 is an electromagnetic valve which is disposed in a fluid passage connecting the dummy cylinder 30 and the output fluid pressure passage A1 and normally left closed. When the cutoff valve X blocks the flow of the brake fluid from the output fluid pressure passage A1 to the communicating passage A2 (when the pump 47A is operated), the on-off valve 31 opens and allows the brake fluid to flow from the output fluid pressure passage A1 to the dummy cylinder 30 (see FIG. 3). In the present embodiment, the on-off valve 31 is set to open when a driving unit of a vehicle is started.

The check valve 31a is a one-way valve that is connected in parallel with the on-off valve 31 and allows a flow of the brake fluid only from the dummy cylinder 30 to the output fluid pressure passage A1.

The first fluid pressure sensor 11 is configured for measuring a brake fluid pressure in the output fluid pressure passage A1 (or A3) when the cutoff valve X is closed.

The modulator Mo is a member configured for adjusting a brake fluid pressure to be applied on the wheel brake B1.

The regulator 40 includes a cut valve 41 and a check valve 40a, and has a function of: switching between a state that allows a flow of the brake fluid from the communicating passage A2 to the output fluid pressure passage RA and a state that blocks the flow; and adjusting the brake fluid pressures of the output fluid pressure passage RA and the discharged fluid pressure passage E1 to a set value or less when the flow of the brake fluid from the communicating passage A2 to the output fluid pressure passage RA is blocked.

The cut valve 41 is a linear solenoid valve which is disposed between the communicating passage A2 and the output fluid pressure passage RA and normally open. The cut valve 41 switches between a state that allows a flow of the brake fluid from the communicating passage A2 to the output fluid pressure passage RA and a state which shuts off the flow. In other words, the cut valve 41 has a function of adjusting valve-opening pressure by controlling current application to the solenoid. Since the cut valve 41 is normally left open, the brake fluid is allowed to return (circulate) from the output fluid pressure passage RA (with the inlet valve 42 being left closed) to the communicating passage A2, that has been discharged from the pump 47A to the discharged fluid pressure passage E1 and then to the output fluid pressure passage RA. In addition, when the brake lever L1 is operated, i.e. the brake fluid pressure acts on the wheel brake B1, the cut valve 41 is closed by the controller 400. According to the balance between the brake fluid pressure acting on the regulator 40 through the communicating passage A2 and a force to close the valve controlled by current application to the solenoid, the brake fluid pressure in the discharged fluid pressure passage E1 and the output fluid pressure passage RA can be appropriately released to the communicating passage A2, so that the brake fluid pressure is properly adjusted.

The check valve 40a is connected to the fluid passages in parallel with the cut valve 41. The check valve 40a is a one-way valve that allows a flow of the brake fluid only from the communicating passage A2 to the output fluid pressure passage RA. With the use of this check valve 40a, even when the pump 47A is not operated, a brake fluid discharged from the pressure member 48, which will be described later, can be applied to the output fluid pressure passage RA.

The control valve unit V1 includes the inlet valve 42, a check valve 42a and the outlet valve 43, and has a function of switching among: a state in which the output fluid pressure passage RA is left open and the open passage D1 is left closed; a state in which the output fluid pressure passage RA is left closed and the open passage D1 is left open; and a state in which both the output fluid pressure passage RA and the open passage D1 are left closed.

The inlet valve 42 is an electromagnetic valve which is disposed in the output fluid pressure passage RA and normally open. When the inlet valve 42 is left open, the brake fluid is allowed to flow from the upstream side to the downstream side, and when the inlet valve 42 is left closed, the flow is blocked.

The check valve 42a is connected to the passage in parallel with the inlet valve 42, and allows a flow of the brake fluid only from the downstream side to the upstream side.

The outlet valve 43 is an electromagnetic valve which is disposed between the output fluid pressure passage RA and the open passage D1 and normally left closed. When the outlet valve 43 is left closed, the flow of the brake fluid from the wheel brake B1-side to a reservoir 44-side is blocked, and when the outlet valve 43 is left open, the brake fluid is allowed to flow.

The reservoir 44 is disposed in the open passage D1, and has a function of temporarily storing brake fluid diverging from the output fluid pressure passage RA when the outlet valve 43 is opened. The open passage D1 has a check valve 43a.

Each of the first accumulator 45 and the second accumulator 46 as brake fluid pools is a low-pressure accumulator disposed in the communicating passage A2, which reserves the brake fluid that has entered the communicating passage A2 from the master cylinder C1 through the output fluid pressure passage A1 and the cutoff valve X by the operation of the brake lever L1 when the pump 47A is not operated; and the brake fluid returned to the communicating passage A2 through the open passage D1 when, for example, the pressure is reduced. For attaining this, the first accumulator 45 and the second accumulator 46 have pool chambers 45B and 46B, respectively, for reserving the brake fluid that has flown from the communicating passage A2. In the present embodiment, a volume of the pool chamber 46B of the second accumulator 46 is made larger than a volume of the pool chamber 45B of the first accumulator 45. In other words, the volume of the brake fluid flowing into/from the second accumulator 46 is made larger than the volume of the brake fluid flowing into/from the first accumulator 45. It should be noted that, with respect to the accumulators 45 and 46, the pool chambers 45B, 46B may have the same volume, and an accumulator number may be arbitrary selected, including one. Brake fluid stored in the accumulators 45, 46 is sucked into the sucked fluid pressure passage F1 through the communicating passage A2 due to the action of the pump 47A.

The "fluid pool" used herein means a member for storing the brake fluid, and not limited to the accumulators 45, 46, and examples include a reservoir tank (not shown), a master cylinder, pipings and the like that can reserve the brake fluid. In addition, the reservoir tank and the like of the master cylinder C1 may be used as a fluid pool for directly supplying the brake fluid from the reservoir tank through pipings (not shown).

The pump 47A is disposed between the sucked fluid pressure passage F1 and the discharged fluid pressure passage E1 leading to the output fluid pressure passage RA. The pump 47A is driven by rotation of a motor 200, and sucks the brake fluid from the sucked fluid pressure passage F1 and discharges the sucked fluid into the discharged fluid pressure passage E1. When the cut valve 41 is left closed, the pump 47A sucks the brake fluid stored in the accumulators 45, 46 and discharges the brake fluid into the discharged fluid pressure passage E1. With this configuration, the pressure state of the output fluid pressure passage RA that has reduced by storing the brake fluid in the accumulators 45, 46 can be resumed, and the brake fluid pressure relative to the wheel brake B1 can be increased based on the operation of the brake lever L1 or the action of the interlocking braking.

It should be noted that, on a suction side and a discharge side of the pump 47A, there are provided a suction valve 47a and a discharge valve 47b, respectively.

A damper and an orifice (not shown) may be disposed in the discharged fluid pressure passage E1 extending from the pump 47A, for attenuating pulsation of the brake fluid discharged from the pump 47A by their cooperative action.

The pressure member 48 includes: a cylinder chamber 48a; and a pressure piston 48d which is slidably disposed in the cylinder chamber 48a and partitions the cylinder chamber 48a into a pool chamber 48b and a pressure chamber 48c (FIG. 2 shows a state in which a volume of the pressure chamber 48c is minimum).

The pool chamber 48b is connected to the pump 47A on a sucked fluid pressure passage F1-side, and the brake fluid returned to the sucked fluid pressure passage F1 (communicating passage A2) can flow thereinto. The pressure chamber 48c communicates with the output fluid pressure passage A3 that leads to the master cylinder C1 through the output fluid pressure passage A1, and the brake fluid that has flown out by the operation of the brake lever L1 flows from the master cylinder C1 into the pressure chamber 48c through the output fluid pressure passages A1 and A3.

The pressure piston 48d is pressed to a pressure chamber 48c-side in the cylinder chamber 48a by a spring 48e as a pressing member. With this configuration, a room for the pool chamber 48b is maintained, to thereby allow the brake fluid to flow into the pool chamber 48b.

In this pressure member 48, the brake fluid flows into the pool chamber 48b and is stored therein, the pressure piston 48d is slidably moved by a fluid pressure resulting from the operation of the brake lever L1 through the output fluid pressure passage A3 on the master cylinder C1-side, and the brake fluid in the pool chamber 48b is discharged into the sucked fluid pressure passage F1 connected to the pump 47A. With this configuration, the fluid pressure corresponding to the operation of the brake lever L1 can be supplied to the sucked fluid pressure passage F1 connected to the pump 47A. It should be noted that the fluid pressure supplied to the sucked fluid pressure passage F1 connected to the pump 47A is in turn supplied to the discharged fluid pressure passage E1 through the pump 47A, and as a result, is supplied to the wheel brake B1 through the output fluid pressure passage RA.

When the operation of the brake lever L1 is ended and the brake lever L1 resumes the nonoperative position, the fluid pressure in the output fluid pressure passage A3 decreases, and the pressure piston 48d of the pressure member 48 is pushed back to the pressure chamber 48c-side by the spring 48e, to thereby allow the brake fluid to flow from the sucked fluid pressure passage F1 (communicating passage A2) to the pool chamber 48b now have a larger volume.

The first fluid pressure sensor 11 is configured for measuring a brake fluid pressure in the master cylinder C1, and in the present embodiment, disposed in the output fluid pressure passage A1. The value of the brake fluid pressure measured at the first fluid pressure sensor 11 is continuously input in the controller 400, and based on a magnitude of the brake fluid pressure measured at the first fluid pressure sensor 11, interlocking braking control or the like are performed.

The second fluid pressure sensor 12 is configured for measuring a brake fluid pressure acting on the wheel brake B1, and disposed in the output fluid pressure passage RA. The value of the brake fluid pressure measured at the second fluid pressure sensor 12 is continuously input in the controller 400, and based on a magnitude of the brake fluid pressure measured at the second fluid pressure sensor 12, interlocking braking control or the like are preformed.

The motor 200 is a common power source for the pump 47A of the brake system K1 on the front wheel-side and a pump 47B of the brake system K2 on the rear wheel-side, and acts based on instructions from the controller 400.

Next, the brake system K2 on the rear wheel-side will be explained. Hereinbelow, a fluid passage leading from the inlet port 23 to the outlet port 24 is referred to as an "output fluid pressure passage A4"; a fluid passage leading from the output fluid pressure passage A4 to the pump 47B is referred to as an "open passage D2"; a fluid passage leading from the pump 47B to the output fluid pressure passage A4 is referred to as a "discharged fluid pressure passage E2"; and a fluid passage from the open passage D2 to the pump 47B is referred to as a "sucked fluid pressure passage F2".

The brake system K2 on the rear wheel-side includes a control valve unit V2 (including an inlet valve 52 and an outlet valve 53, which are electromagnetic valve), the pump 47B, and a third fluid pressure sensor 13.

The control valve unit V2 includes the inlet valve 52, a check valve 52a and the outlet valve 53, and has a function of switching among: a state in which the output fluid pressure passage A4 is left open and the open passage D2 is left closed; a state in which the output fluid pressure passage A4 is left closed and the open passage D2 is left open; and a state in which both the output fluid pressure passage A4 and the open passage D2 are left closed.

The inlet valve 52 is an electromagnetic valve which is disposed in the output fluid pressure passage A4 and normally open. When the inlet valve 52 is left open, the brake fluid is allowed to flow from the master cylinder C2-side to the wheel brake B2-side, and when the inlet valve 52 is left closed, the flow is blocked.

The check valve 52a is connected to the flow passage in parallel with the inlet valve 52, and allows a flow of the brake fluid only from the wheel brake B2-side to the master cylinder C2-side.

The outlet valve 53 is an electromagnetic valve which is disposed between the output fluid pressure passage A4 and the open passage D2 and normally left closed. When the outlet valve 53 is left closed, the flow of the brake fluid from the wheel brake B2-side to a pump 47B-side is blocked, and when the outlet valve 53 is left open, the brake fluid is allowed to flow.

The pump 47B is disposed between the sucked fluid pressure passage F2 extending from the open passage D2 and the discharged fluid pressure passage E2 leading to the output fluid pressure passage A4. The pump 47B is driven by rotation of the motor 200, and sucks the brake fluid from the sucked fluid pressure passage F2 and discharges the sucked fluid into the discharged fluid pressure passage E2. The pump 47B also has a function of returning, from the discharged fluid pressure passage E2 through the output fluid pressure passage A4 to the master cylinder C2, the brake fluid returned to the sucked fluid pressure passage F2 through the open passage D2.

It should be noted that, on a suction side and a discharge side of the pump 47B, there are provided a suction valve 57a and a discharge valve 57b, respectively.

A damper and an orifice (not shown) may be disposed in the discharged fluid pressure passage E2 extending from the pump 47B, for attenuating pulsation of the brake fluid discharged from the pump 47B by their cooperative action. Further, a reservoir (not shown) may be disposed in the sucked fluid pressure passage F2.

The third fluid pressure sensor 13 is configured for measuring a brake fluid pressure in the master cylinder C2, and in the present embodiment, disposed in the output fluid pressure passage A4. The value of the brake fluid pressure measured at the third fluid pressure sensor 13 is continuously input in the controller 400, and based on a magnitude of the brake fluid pressure measured at the third fluid pressure sensor 13, interlocking braking control or the like are performed.

Based on outputs from the first fluid pressure sensor 11, the second fluid pressure sensor 12 and the third fluid pressure sensor 13, a front wheel speed sensor 401 opposingly fixed against a side face of a pulsar gear (not shown) fixed to the front wheel, a rear wheel speed sensor 402 opposingly fixed against a side face of a pulsar gear (not shown) fixed to the rear wheel and the like, the controller 400 controls: opening/closing of the cut valve 41 of the regulator 40, the on-off valve 31 and the cutoff valve X in the brake system K1 of the front wheel-side; opening/closing of the inlet valves 42, 52 and the outlet valves 43, 53 in the control valve units V1, V2 of the both systems K1, K2; and an operation of the motor 200.

Next, with referring to the fluid pressure circuit diagram of FIGs. 2-4, regular braking control, interlocking braking control and anti-lock braking control performed by the controller 400 will be explained.

First, referring to FIG. 2, when an engine (not shown) is not running (when an ignition is off), the cutoff valve X of the brake system K1 on the front wheel-side is opened, and the output fluid pressure passage A1 is in communication with the communicating passage A2. In addition, the on-off valve 31 is closed and a communication between the output fluid pressure passage A1 and the dummy cylinder 30 becomes blocked. In other words, the brake fluid pressure generated by the operation of the brake lever L1 is exerted on the modulator Mo-side, and becomes capable of being applied on the wheel brake B1 through the communicating passage A2 and the output fluid pressure passage RA.

In this case, a brake fluid pressure generated by the operation of the brake lever L1 is applied to the pressure chamber 48c of the pressure member 48 through the output fluid pressure passage A3, while the same brake fluid pressure generated by the operation of the brake lever L1 is also applied to a pool chamber 48b-side of the pressure member 48 through the communicating passage A2. With this configuration, no differential pressure is generated between the both sides of the pressure piston 48d, and the pressure piston 48d does not slidably move. Therefore, the pressure member 48 maintains a state in which the brake fluid is stored in the pool chamber 48b. As will be described later, the brake fluid stored in the pool chamber 48b is discharged when braking operation is performed while the engine is running, to thereby quickly raise a braking force.

When the engine is not running and the brake lever L1 is operated, as explained above, the brake fluid flows into the communicating passage A2. Therefore, brake fluid flowing in can be stored in the accumulators 45, 46 connected to the communicating passage A2.

In the brake system K2 on the rear wheel-side, the master cylinder C2 communicates with the wheel brake B2 through the output fluid pressure passage A4, and when the brake pedal L2 is operated, the brake fluid pressure is applied to the wheel brake B2 through the output fluid pressure passage A4.

Next, referring to FIG. 3, when the engine (not shown) is started, the controller 400 closes the cutoff valve X of the brake system K1 on the front wheel-side, and thus a communication between the output fluid pressure passage A1 and the communicating passage A2 becomes blocked. In addition, the on-off valve 31 is opened and the output fluid pressure passage A1 and the dummy cylinder 30 are in communication with each other. In other words, a fluid passage (communicating passage A2) between the stroke simulator Si and the modulator Mo becomes blocked and separated by the cutoff valve X and the brake fluid pressure generated by the operation of the brake lever L1 is applied to the dummy cylinder 30.

Meanwhile, on the modulator Mo-side, the communicating passage A2 is blocked, and a brake fluid pressure from the master cylinder C1 is not directly applied to the wheel brake B1. Therefore, the brake fluid pressure generated by the operating force of the brake lever L1 is directly applied to the dummy cylinder 30. This brake fluid pressure is measured by the first fluid pressure sensor 11.

In addition, when the cutoff valve X is closed, based on the detected brake fluid pressure by the first fluid pressure sensor 11, it is determined whether or not a generation of a brake fluid pressure is necessary. If the generation is necessary, the motor 200 starts to rotate to thereby start operation of the pumps 47A, 47B.

In this case, when the brake lever L1 is not operated and there is no braking input to the brake system K1 on the front wheel-side, the inlet valve 42 is left closed.

### (Regular braking control)

In a case of the regular braking control where each wheels are not locked, when a rider operates the brake lever L1, a brake fluid pressure generated by the operating force is detected by the first fluid pressure sensor 11, the cut valve 41 becomes closed, and the inlet valve 42 becomes open. As a result, the brake fluid stored in the accumulators 45, 46 disposed in the communicating passage A2 is sucked into the pump 47A through the sucked fluid pressure passage F1, discharged to the discharged fluid pressure passage E1, and sent to the wheel brake B1 through the output fluid pressure passage RA. Until a pressure value measured at the second fluid pressure sensor 12 becomes a pressure value corresponding to the pressure value measured at the first fluid pressure sensor 11, this state is maintained and braking is kept applied to the front wheel.

In this case, based on the operation of the brake lever L1, the brake fluid flows from the output fluid pressure passage A3 into the pressure chamber 48c of the pressure member 48, and the pressure piston 48d is pressed with a brake fluid pressure corresponding to the operating force of the brake lever L1.

When the pressed pressure piston 48d moves to the pool chamber 48b-side, the brake fluid stored in the pool chamber 48b flows out from the pool chamber 48b to the sucked fluid pressure passage F1 (and the communicating passage A2). Subsequently, the brake fluid that has flown out through the sucked fluid pressure passage F1 is sucked into the pump 47A. In this case, when a brake fluid pressure of the sucked brake fluid is equivalent to or more than biasing forces (discharging pressure) of the suction valve 47a and the discharge valve 47b, the suction valve 47a and the discharge valve 47b are pressed open, and the brake fluid pressure is transmitted through the pump 47A and applied to a discharged fluid pressure passage E1-side. To sum up, the brake fluid pressure corresponding to the operating force of the brake lever L1 can be added to the brake fluid pressure from the pump 47A. As a result, response to operation of the brake lever L1, as well as rise of braking force in initial braking of the wheel brake B1, can be improved.

It should be noted that, when the brake lever L1 is loosened or released, the brake fluid that has flown into the output fluid pressure passage RA is returned to the sucked fluid pressure passage F1 through the open passage D1 and the communicating passage A2, after passing through the outlet valve 43. The brake fluid returned to the communicating passage A2 flows into and is stored in the first accumulator 45 and the second accumulator 46.

### (Interlocking braking control)

Interlocking braking control is performed when the rider operates the brake pedal L2 on the rear wheel-side and a braking force corresponding to the braking force (brake fluid pressure) on the rear wheel is to be applied to the wheel brake B1 on the front wheel-side.

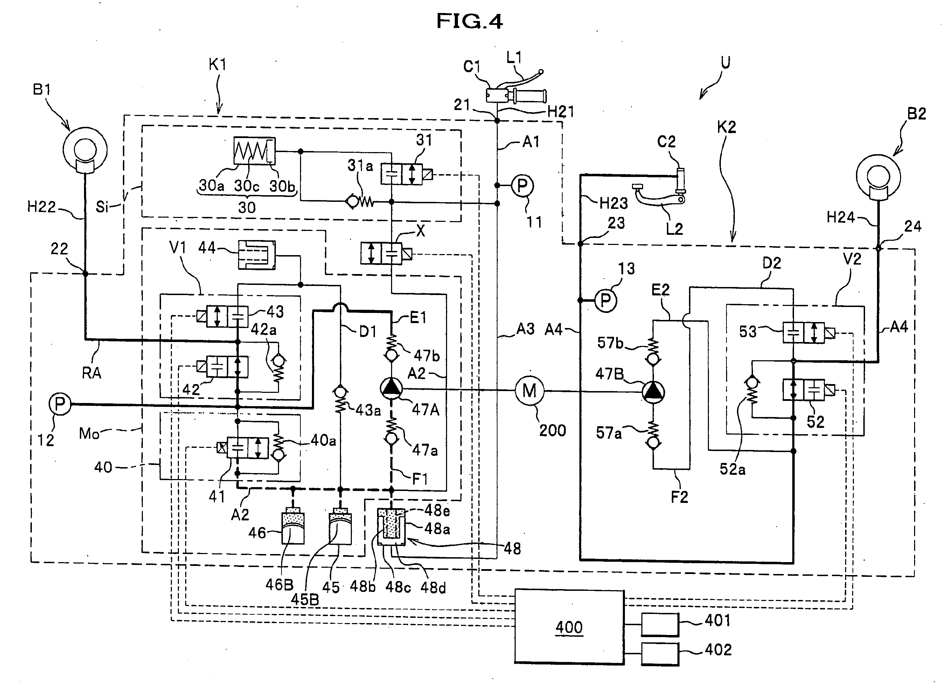

For example, the interlocking braking control is performed when the rider operates the brake pedal L2 to exert braking on the rear wheel, and the controller 400 determines that a braking force should be applied to the front wheel based on various information input in the controller 400, such as the operation amount of the brake pedal L2 and the brake fluid pressure measured by the third fluid pressure sensor 13. In this case, for example, the controller 400 sets a target pressure of the second fluid pressure sensor 12 disposed in the brake system K1 on the front wheel-side based on a pressure measured by the third fluid pressure sensor 13 disposed in the brake system K2 on the rear wheel-side, and in the brake system K1 on the front wheel-side, the cut valve 41 is closed by excitation and the inlet valve 42 is opened, as shown in FIG. 4. Until a pressure measured by the second fluid pressure sensor 12 reaches the target pressure, this condition is retained, the brake fluid in the accumulators 45, 46 on the communicating passage A2 is discharged from the sucked fluid pressure passage F1 to the discharged fluid pressure passage E1 through the pump 47A, and the brake fluid pressure is automatically applied to the wheel brake B1 on the front wheel. As a result, braking is exerted on the front wheel.

### (Anti-lock braking control)

Anti-lock braking control is performed when a wheel is about to be locked, by controlling the control valve units V1, V2 of the wheel brakes B1, B2, respectively, of the wheel that is about to be locked, to thereby appropriately select a condition of the brake fluid pressures applied to the wheel brakes B1, B2, from among reducing, increasing and maintaining. The selection of the pressure condition from among reducing, increasing and maintaining is determined by the controller 400 based on wheel speed obtained from the front wheel seed sensor 401 and the rear wheel speed sensor 402.

If the controller 400 determines that a brake fluid pressure exerted on the wheel brake B1 on the front wheel should be reduced, the control valve unit V1 closes the output fluid pressure passage RA and opens the open passage D1. Specifically, the controller 400 excites the inlet valve 42 into a closed state and excites the outlet valve 43 into an opened state. With this configuration, the brake fluid in the output fluid pressure passage RA leading to the wheel brake B1 flows into the reservoir 44 through the open passage D1, and as a result, the brake fluid pressure exerted on the wheel brake B1 on the front wheel is reduced. Subsequently, the brake fluid that has flown into the reservoir 44 returns to the open passage D1 and then to the communicating passage A2 by suction of the pump 47A, and flows into the accumulators 45, 46 and is stored therein.

If the controller 400 determines that a brake fluid pressure exerted on the wheel brake B1 on the front wheel should be maintained, the control valve unit V1 closes both the output fluid pressure passage RA and the open passage D1. Specifically, the controller 400 excites the inlet valve 42 into a closed state and demagnetizes the outlet valve 43 into a closed state. With this configuration, the brake fluid is trapped in a fluid passage confined by the wheel brake B1, the inlet valve 42 and the outlet valve 43, and as a result, the brake fluid pressure exerted on the wheel brake B1 is maintained.

If the controller 400 determines that a brake fluid pressure exerted on the wheel brake B1 on the front wheel should be increased, the control valve unit V1 opens the output fluid pressure passage RA and closes the open passage D1. Specifically, the controller 400 demagnetizes the inlet valve 42 into an opened state and demagnetizes the outlet valve 43 into a closed state. With this configuration, the brake fluid that has flown from the discharged fluid pressure passage E1 to the output fluid pressure passage RA due to the action of the pump 47A acts on the wheel brake B1 through the inlet valve 42, and as a result, the brake fluid pressure is increased.

It should be noted that, when the brake fluid pressure of the output fluid pressure passage RA becomes a set value or more, the brake fluid in the output fluid pressure passage RA is released to the communicating passage A2 due to an action of the cut valve 41, and as a result, excessive brake fluid pressure is prevented from being applied to the wheel brake B1.

According to the brake controller U described above, in the pressure member 48, the pressure piston 48d is slidably moved by a brake fluid pressure resulting from the operation of the brake lever L1 on the master cylinder C1-side, to thereby discharge brake fluid, and by the discharged brake fluid, pressure is applied from the sucked fluid pressure passage F1 extending from the pump 47A to the discharged fluid pressure passage E1 and the output fluid pressure passage RA through the pump 47A. In this manner, the brake fluid pressure generated by the operation of the brake lever L1 is transmitted to the wheel brake B1-side through the pressure member 48. For short, even though the cutoff valve X blocks the connection between the master cylinder C1-side and the wheel brake B1-side, brake fluid pressure generated by the operation of the brake lever L1 is directly applied to the wheel brake B1-side. As a result, rise of braking force in initial braking of the wheel brake B1, as well as braking response to operation of the brake lever L1, is improved.

Specifically, when the brake lever L1 is operated, the brake fluid that has flown out by the operation enters the pressure chamber 48c in the cylinder chamber 48a, which causes brake fluid pressure that slides the pressure piston 48d. Subsequently, sliding of the pressure piston 48d discharges the brake fluid stored in the pool chamber 48b in the cylinder chamber 48a, and by the discharged brake fluid, pressure is applied to the fluid pressure passages (including the discharged fluid pressure passage El) of the wheel brake B1, extending from the pump 47A. As a result, the fluid pressure generated by the operation of the brake lever L1 is transmitted to the wheel brake B1-side through the pressure member 48, and rise of braking force in initial braking of the wheel brake B1, as well as braking response to operation of the brake lever L1, is improved.

In addition, when the pump 47A is operated, the pressure member 48 applies a pressure to the pump 47A by discharging the brake fluid through the communicating passage A2 and the sucked fluid pressure passage F1 leading to the pump 47A. Thus, suction efficiency of the pump 47A can be enhanced, and suitable pressure is applied through the discharged fluid pressure passage E1 extending from the pump 47A to the output fluid pressure passage RA. Therefore, rise of braking force in initial braking of the wheel brake, as well as braking response to operation of the brake lever L1, is improved.

It should be noted that, even when the pump 47A is not operated, the pressure member 48 can apply pressure to the output fluid pressure passage RA through the check valve 40a of the regulator 40, and contributes to rise of braking force in initial braking of the wheel brake B1.

In addition, when the pump 47A is operated, the output fluid pressure passage A1 and the communicating passage A2 that connect the master cylinder C1-side and the wheel brake B1-side are blocked by the cutoff valve X. Thus, even though pulsation is generated in the communicating passage A2 due to the operation of the pump 47A, the pulsation is blocked by the cutoff valve X, and the pulsation is prevented from being transmitted to the master cylinder C1-side. Therefore, for example, even when the brake fluid pressure is applied to the wheel brake B1-side by the pump 47A and the brake lever L1 is additionally operated, the pulsation is not transmitted to the brake lever L1.

Since the cylinder chamber 48a of the pressure member 48 has a spring 48e that presses the pressure piston 48d to a pressure chamber 48c-side as a pressing member, the pressure piston 48d automatically slides back to the pressure chamber 48c-side after the brake fluid is discharged from the pressure chamber 48c, and thus the brake fluid automatically flows in the pool chamber 48b. Therefore, braking response to operation of the brake lever L1, as well as rise of braking force in initial braking of the wheel brake, is improved.

In addition, in the pool chamber 48b, the brake fluid is flown and stored when the pump 47A and the brake lever L1 are not operated. Therefore, the brake fluid to be returned to the communicating passage A2, the sucked fluid pressure passage F1 and the like can be smoothly introduced to the pool chamber 48b. As a result, the brake controller U with enhanced braking response to operation of the brake lever L1 can be obtained.

Moreover, the pump 47A is configured to act based on a magnitude of the brake fluid pressure detected by the first fluid pressure sensor 11 which is disposed in the master cylinder C1-side relative to the cutoff valve. Therefore, even though the connection between the master cylinder C1-side and the wheel brake B1-side is blocked by the cutoff valve X, a magnitude of the brake fluid pressure on the master cylinder C1-side corresponding to the operating force of the brake lever L1 can be applied on the brake fluid pressure of the wheel brake B1-side.

Further, in the case where both of the brake system K1 on the front wheel-side and brake system K2 of the rear wheel-side are operated under interlocking braking control, communication between the master cylinder C1-side and the communicating passage A2 is blocked by the cutoff valve X. Therefore, even when pulsation is generated in communicating passage A2 due to the operation of the pump 47A, the pulsation is blocked by the cutoff valve X and, even when the brake lever L1 is additionally operated, the pulsation of the pump 47A is prevented from being transmitted to the brake lever L1. As a result, a brake controller U with excellent operation feeling of the brake lever L1 is obtained.

### (Second embodiment)

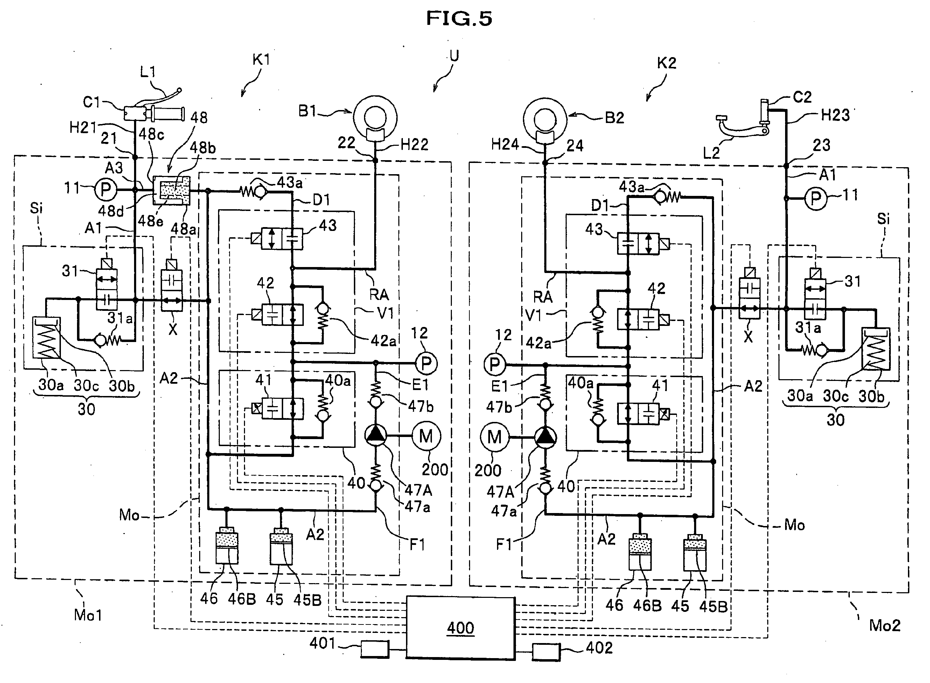

FIG. 5 is a brake fluid pressure circuit diagram to be used for a brake controller according to a second embodiment of the present invention.

The present embodiment is different from the first embodiment in that the brake system K1 on the front wheel-side and the brake system K2 on the rear wheel-side are formed on separate bases Mo1, Mo2, respectively. In other words, on the base Mo1, only flow passages and devices forming the brake system K1 on the front wheel-side are mounted, while on the base Mo2, only flow passages and devices forming the brake system K2 on the rear wheel-side are mounted. Therefore, as compared with a single base of the above-mentioned embodiment on which both of the brake systems K1, K2 are mounted, each of the bases Mo1, Mo2 can be made smaller. As a result, mounting of the base on a vehicle (not shown) becomes more flexibe, which enhances mountability of the base on a vehicle (not shown).

It should be noted that the brake systems K1, K2 have the same configuration except that the brake system K1 has the pressure member 48, and thus the brake system K2 on the rear wheel-side includes the stroke simulator Si, the regulator 40 and the accumulators 45, 46. With this configuration, also in the brake system K2 on the rear wheel-side, the pulsation is prevented from being transmitted to the brake pedal L2, and the brake fluid that has returned through the open passage D1 flows into two accumulators 45, 46 connected to the communicating passage A2, where the brake fluid is reserved.

Since the accumulators 45, 46 also function as reservoir, no reservoir is present in the brake systems K1, K2.

In FIG. 5, the controller 400 is configured to control both brake systems K1, K2. However, separate controllers may be disposed for each of the systems K1, K2, which enhances mountability of the brake systems on a vehicle.

According to the brake controller U of the present embodiment, the bases Mo1 and Mo2 are separately mounted on the front wheel-side and the rear wheel-side, respectively. With this configuration, each of the bases Mo1, Mo2 can be downsized, which enhances mountability of the bases, i.e., brake systems, on a vehicle (not shown).

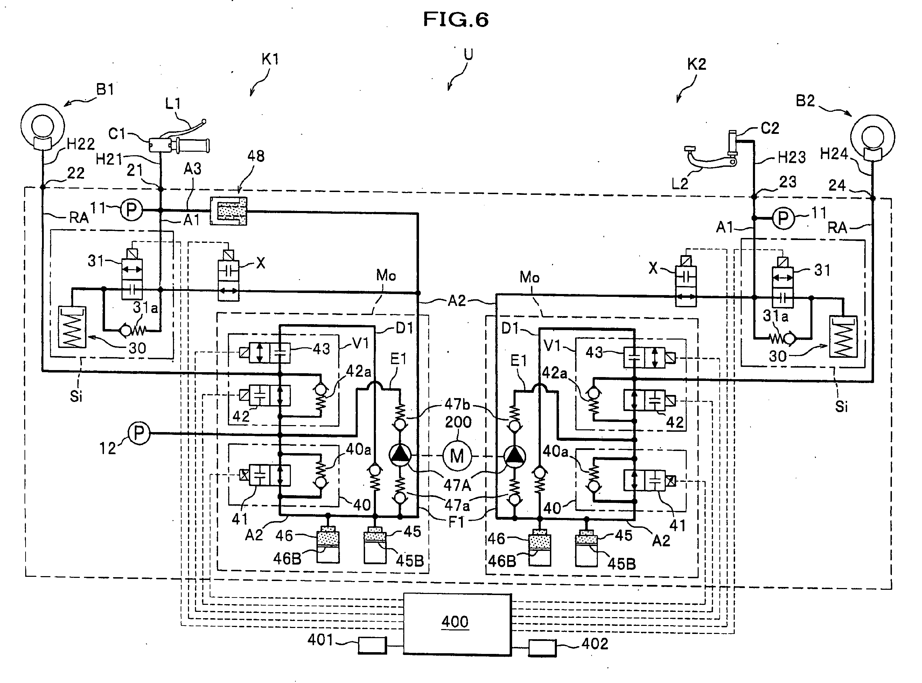

FIG. 6 is a modified example of a brake fluid pressure circuit diagram to be used for a brake controller U for a vehicle according to the second embodiment of the present invention.

In this modified example, two separate bases Mo, Mo on which the brake systems K1, K2 are separately mounted, are combined as one base. With this configuration, the motor 200 serves as a common power source for both pumps 47A, 47A.

According to the brake controller U of the present embodiment, as compared with a case where the brake systems K1, K2 are separately mounted on the two bases Mo 1, Mo 2, one base is shared by two systems. The motor 200 is also shared, which reduces power consumption.

In addition, the flow passage configuration and device members, except the pressure member 48, are approximately the same in both of the brake systems K1, K2, and therefore, there is an advantage in that designing and assembling a flow passage are easy (especially because the flow passage can be symmetrically designed on a base), though the brake fluid pressure circuit has a relatively large number of flow passages and devices.

The present invention should not be limited to the particular embodiments discussed above and may be carried out in various modified forms.

For example, the pressure member 48 may include a regulating member that regulates an amount of slide movement of the pressure piston 48d to a predetermined amount.

If there is no regulation by such a regulating member, and the pressure piston is slidably moved in accordance with the operation of the brake operation element, braking that exceeds what is required by the rider may be exerted on a wheel brake, depending on an amount of the discharged brake fluid. This will rather deteriorate operation feeling of the brake operation element.

On the other hand, according to the brake controller U of the present embodiment, the amount of slidable movement of the pressure piston 48d is regulated to a predetermined amount by the regulating member, to thereby prevent the amount of brake fluid discharged by the pressure piston 48d from exceeding the predetermined amount.

Accordingly, a brake fluid pressure generated by the operation of the brake lever L1 is not excessively transmitted to the wheel brake B1-side, which enhances response to operation of the brake lever L1.

Further more, the pressure member 48 may be connected to the discharged fluid pressure passage E1 extending from the pump 47A, so that the brake fluid pressure caused by slidable movement of the pressure piston 48d is directly applied to the discharged fluid pressure passage E1.

In general, more excellent operation feeling is demanded in a brake lever for operating a front wheel brake, as compared with a brake pedal for operating a rear wheel brake. Therefore, in the embodiments above, descriptions are made especially regarding the brake fluid pressure controller of the present invention applied to the front wheel. However, the present invention is not limited to these embodiments, and there are included embodiments in which the brake fluid pressure controller of the present invention is applied to the rear wheel, or both the front wheel and the rear wheel.

## Claims

1. A vehicle brake fluid pressure controller (U) having first and second brake systems (K1, K2), a brake operation element (L1, L2), a master cylinder (C1, C2) and a wheel brake (B1, B2) for each brake system, each brake system comprising a pump (47A, 7B) configured for, when the brake operation element (L1, L2) of one of the first and second brake systems (K1, K2) is operated, being activated and increasing a brake fluid pressure to provide a braking force to the wheel brake (B1, B2) of the other brake system in which the brake operation element (L1, L2) is not operated,
wherein
at least one of the first and second brake systems (K1, K2) comprises:
a cutoff valve (X) which is disposed between the suction side of the pump (47A, 47B) and the master cylinder (C1, C2) and blocks an output fluid pressure passage (A1) leading from a master cylinder-side to a communicating passage (A2) and a output fluid pressure passage (RA) on a wheel brake-side when the pump (47A, 47B) is operated;
a brake fluid pool (45, 46) disposed in the communicating passage (A2) between the cutoff valve (X) and the suction side of the pump (47A, 47B); and
a pressure member (48) being directly connected to the master cylinder (C1) at its one side and to the communicating passage (A2) and to a sucked fluid pressure passage (F1) leading to the suction side of the pump (47) at its other side, configured for being slidably moved by a brake fluid pressure generated on the master cylinder-side relative to the cutoff valve (X) by an operation of the brake operation element (L1) and for providing pressure to the communicating passage (A2) and the output fluid pressure passage (RA) leading to the wheel brake (B1, B2) of the at least one of the brake systems.

2. The brake fluid pressure controller according to Claim 1, wherein the pressure member (48) applies a pressure through the pump (47A) to a discharged fluid pressure passage (E1) extending from the pump (47A), by applying a pressure to the sucked fluid pressure passage (F1) leading to the pump (47A) when the pump (47A) is operated.

3. The brake fluid pressure controller according to Claim 1 or 2, wherein the pressure member (48) comprises: a cylinder chamber (48a); and a pressure piston (48d) which is slidably disposed in the cylinder chamber (48a) and partitions the cylinder chamber (48a) into a pool chamber (48b) and a pressure chamber (48c), and
the pressure member (48) is configured such that:
a brake fluid flows into and is stored in the pool chamber (48b) when the brake operation element (L1) is not operated;
a brake fluid pressure of the master cylinder-side relative to the cutoff valve (X) is applied to the pressure chamber (48c), and
the pressure piston (48d) is allowed to slidably move by the brake fluid pressure generated by the operation of the brake operation element (L1) to discharge the brake fluid stored in the pool chamber (48b).

4. The brake fluid pressure controller according to claim 3, wherein the pressure member (48) has a regulating member that regulates an amount of slide movement of the pressure piston (48d) to a predetermined amount.

5. The brake fluid pressure controller according to claim 3 or 4, wherein the cylinder chamber (48a) of the pressure member (48) has a pressing member (48e) that presses the pressure piston (48d) to a pressure chamber (48c) side.

6. The brake fluid pressure controller according to any one of Claims 1 to 5, wherein the brake system comprising the pressure member (48) is a brake system of a front wheel-side.

## Patentansprüche

1. Kraftfahrzeugbremsflüssigkeitssteuergerät (U), welches ein erstes und ein zweites Bremssystem (K1, K2), ein Bremsbetätigungselement (L1, L2), einen Masterzylinder (C1, C2) und eine Radbremse (B1, B2) für jedes Bremssystem aufweist, wobei jedes Bremssystem eine Pumpe (47A, 47B) umfasst, welche konfiguriert ist, um, wenn das Bremsbetätigungselement (L1, L2) von einem von erstem und zweitem Bremssystem (K1, K2) betätigt wird, aktiviert zu werden und um einen Bremsflüssigkeitsdruck zu erhöhen, um eine Bremskraft an die Radbremse (B1, B2) des anderen Bremssystems vorzusehen, in welchem das Bremsbetätigungselement (L1, L2) nicht betätigt wird, wobei
zumindest eines von erstem und zweitem Bremssystem (K1, K2) umfasst:
ein Absperrventil (X), welches zwischen der Saugseite der Pumpe (47A, 47B) und dem Masterzylinder (C1, C2) angeordnet ist, und welches einen Ausgangsfluiddruckdurchgang (A1), welcher von einer Masterzylinderseite zu einem Fluiddruckdurchgang (RA) auf einer Radbremsenseite führt, blockiert, wenn die Pumpe (47A, 47B) betätigt wird;
einen Bremsflüssigkeitsvorrat (45, 46), welcher in dem Verbindungsdurchgang (A2) zwischen dem Absperrventil (X) und der Saugseite der Pumpe (27A, 27B) angeordnet ist; und
ein Druckelement (48), welches direkt mit dem Masterzylinder (C1) auf seiner einen Seite und mit dem Verbindungsdurchgang (A2) und mit einem Durchgang für angesaugten Fluiddruck (F1), welcher zu der Saugseite der Pumpe (47A) an ihrer anderen Seite führt, verbunden ist, konfiguriert ist, um durch einen Bremsfluiddruck, welcher auf der Masterzylinderseite erzeugt wird, gleitend relativ zu dem Absperrventil (X) durch eine Betätigung des Bremsbetätigungselements (L1) bewegt zu werden und zum Vorsehen eines Drucks zu dem Verbindungsdurchgang (A2) und dem Durchgang für ausgegebenen Fluiddruck (RA), welcher zu der Radbremse (B1, B2) von zumindest einem von den Bremssystemen führt.

2. Bremsflüssigkeitsdrucksteuergerät gemäß Anspruch 1, wobei das Druckelement (48) einen Druck durch die Pumpe (47A) auf den Durchgang für ausgegebenen Fluiddruck (E1) anwendet, welcher sich von der Pumpe (47A) erstreckt, durch Aufbringen eines Drucks auf den Durchgang für angesaugten Fluiddruck (F1), welcher zu der Pumpe (47A) führt, wenn die Pumpe (47A) betrieben wird.

3. Bremsflüssigkeitsdrucksteuergerät gemäß Anspruch 1 oder 2, wobei das Druckelement (48) umfasst: eine Zylinderkammer (48a); und einen Druckkolben (48d), welcher gleitend in der Zylinderkammer (48a) angeordnet ist, und die Zylinderkammer (48a) in eine Vorratskammer (48b) und eine Druckkammer (48c) unterteilt, und
das Druckelement (48) derartig konfiguriert ist, dass:
eine Bremsflüssigkeit in die Vorratskammer (48b) strömt und darin gespeichert wird, wenn das Bremsbetätigungselement (L1) nicht betätigt wird;
ein Bremsfluiddruck der Masterzylinderseite relativ zu dem Absperrventil (X) auf die Druckkammer (48c) angewandt wird, und
dem Druckkolben (48d) erlaubt wird, sich gleitend durch den Bremsflüssigkeitsdruck zu bewegen, welcher durch die Betätigung des Bremsbetätigungselements (L1) erzeugt wird, um die Bremsflüssigkeit auszugeben, welche in der Vorratskammer (48b) gespeichert ist.

4. Bremsflüssigkeitsdrucksteuergerät gemäß Anspruch 3, wobei das Druckelement (48) ein Einstellelement aufweist, welches ein Ausmaß der Gleitbewegung des Druckkolbens (48d) auf einen vorbestimmten Betrag einstellt.

5. Bremsflüssigkeitsdrucksteuergerät gemäß Anspruch 3 oder 4, wobei die Zylinderkammer (48a) des Druckelements (48) ein drückendes Element (48c) aufweist, welches den Druckkolben (48d) auf eine Druckkammer-(48c)-Seite drückt.

6. Bremsflüssigkeitsdrucksteuergerät gemäß irgendeinem der Ansprüche 1 bis 5, wobei das Bremssystem, welches das Druckelement (48) aufweist, ein Bremssystem einer Vorderradseite ist.

## Revendications

1. Unité de commande de pression de liquide de frein pour véhicule (U) comportant des premier et second systèmes de frein (K1, K2), un élément d'actionnement de frein (L1, L2), un maître-cylindre (C1, C2) et un frein de roue (B1, B2) pour chaque système de frein, chaque système de frein comprenant une pompe (47A, 47B) configurée, lorsque l'élément d'actionnement de frein (L1, L2) de l'un des premier et second systèmes de frein (K1, K2) est actionné, pour être activée et augmenter une pression de liquide de frein pour fournir une force de freinage au frein de roue (B1, B2) de l'autre système de frein dans lequel l'élément d'actionnement de frein (L1, L2) n'est pas actionné,
dans laquelle
au moins l'un des premier et second systèmes de frein (K1, K2) comprend :
une soupape de coupure (X) qui est disposée entre le côté aspiration de la pompe (47A, 47B) et le maître-cylindre (C1, C2) et bloque un passage de pression de liquide de sortie (A1) allant d'un côté maître-cylindre à un passage communicant (A2) et un passage de pression de liquide de sortie (RA) d'un côté frein de roue lorsque la pompe (47A, 47B) est actionnée ;
une réserve de liquide de frein (45, 46) disposée dans le passage communicant (A2) entre la soupape de coupure (X) et le côté aspiration de la pompe (47A, 47B) ; et
un organe de pression (48) étant directement raccordé au maître-cylindre (C1) à l'un de ses côtés et au passage communicant (A2) et à un passage de pression de liquide aspiré (F1) conduisant au côté aspiration de la pompe (47A) à son autre côté, configuré pour être déplacé avec faculté de glissement par une pression de liquide de frein générée du côté maître-cylindre par rapport à la soupape de coupure (X) par un actionnement de l'élément d'actionnement de frein (L1) et pour fournir une pression au passage communicant (A2) et au passage de pression de liquide de sortie (RA) conduisant au frein de roue (B1, B2) du au moins un des systèmes de frein.

2. Unité de commande de pression de liquide de frein selon la revendication 1, dans laquelle l'organe de pression (48) applique une pression par l'intermédiaire de la pompe (47A) à un passage de pression de liquide évacué (E1) s'étendant depuis la pompe (47A), en appliquant une pression au passage de pression de liquide aspiré (F1) conduisant à la pompe (47A) lorsque la pompe (47A) est actionnée.

3. Unité de commande de pression de liquide de frein selon la revendication 1 ou 2, dans laquelle l'organe de pression (48) comprend : une chambre de cylindre (48a) ; et un piston de pression (48d) qui est disposé avec faculté de glissement dans la chambre de cylindre (48a) et divise la chambre de cylindre (48a) en une chambre de réservoir (48b) et une chambre de pression (48c), et
l'organe de pression (48) est configuré de sorte que :
un liquide de frein circule dans et est stocké dans la chambre de réservoir (48b) lorsque l'élément d'actionnement de frein (L1) n'est pas actionné ;
une pression de liquide de frein du côté maître-cylindre par rapport à la soupape de coupure (X) est appliquée à la chambre de pression (48c), et
le piston de pression (48d) peut se déplacer avec faculté de glissement grâce à la pression de liquide de frein générée par l'actionnement de l'élément d'actionnement de frein (L1) pour évacuer le liquide de frein stocké dans la chambre de réservoir (48b).

4. Unité de commande de pression de liquide de frein selon la revendication 3, dans laquelle l'organe de pression (48) comporte un organe de régulation qui régule une quantité de mouvement de glissement du piston de pression (48b) à une quantité prédéterminée.

5. Unité de commande de pression de liquide de frein selon la revendication 3 ou 4, dans laquelle la chambre de cylindre (48a) de l'organe de pression (48) comporte un organe pressant (48e) qui presse le piston de pression (48d) vers un côté chambre de pression (48c).

6. Unité de commande de pression de liquide de frein selon l'une quelconque des revendications 1 à 5, dans laquelle le système de frein comprenant l'organe de pression (48) est un système de frein d'un côté roue avant.
